# EUROPÄISCHE PATENTSCHRIFT

(11) **EP 0 460 494 B1**
(45) Veröffentlichungstag und Bekanntmachung des Hinweises auf die Patenterteilung: **20.07.1994**
(21) Anmeldenummer: 91108629.6
(22) Anmeldetag: 28.05.1991
(51) Int. Cl.: B60R 22/40, B60R 22/38

(54) **Vorrichtung zur elektromagnetischen Betätigung eines Sperrmechanismus eines Gurtaufrollers**
Electromagnetic actuating device for a belt retractor locking mechanism
Dispositif pour l'actionnement électromagnétique du mécanisme de blocage d'un rétracteur de ceinture

(30) Priorität: 07.06.1990 DE 4018214
(43) Veröffentlichungstag der Anmeldung: 11.12.1991
(73) Patentinhaber: HARTING ELEKTRONIK GmbH, 32325 Espelkamp (DE)
(72) Erfinder: Harting, Dietmar, Dipl.-Kaufm., W-4992 Espelkamp (DE); Harting, Ernst-Heinrich, Dipl.-Ing., W-3253 Hess.-Oldendorf (DE); Kokemor, Manfred, Ing. (grad), W-4993 Rahden (DE); Willamowski, Dieter, W-4992 Espelkamp (DE); Brauer, Wolfgang, Dipl.-Ing., W-4905 Spenge (DE)

(56) Entgegenhaltungen:
- FR-A- 2 283 703
- US-A- 3 787 002
- US-A- 4 036 322
- US-A- 4 895 317

## Beschreibung

Die Erfindung betrifft eine Vorrichtung zur elektromagnetischen Betätigung eines Sperrmechanismus eines Gurtaufrollers, insbesondere für Kraftfahrzeug-Sicherheitsgurte, mit einer in einem Gurtaufrollgehäuse gelagerten Haspelwelle, einem mit der Haspelwelle verbundenen und umlaufenden Sperrad und einer Sperrklinke, die zur Blockierung des Gurtabzuges in das Sperrad eingreift, wobei eine drehbar auf der Haspelwelle gelagerte, ringförmige Steuerscheibe mit einer Innenverzahnung vorgesehen ist, die mit einem die Sperrklinke betätigenden äußeren Ansatz/ Zapfen versehen ist, und wobei eine mit der Haspelwelle verbundene und umlaufende Tragplatte vorgesehen ist, die innerhalb der ringförmigen Steuerscheibe angeordnet ist und auf der eine steuerbare Klinke gelagert ist, die bei Betätigung in die Verzahnung der Steuerscheibe eingreift und eine Mitnahme/Drehung der Steuerscheibe bei Drehung der Haspelwelle bewirkt, und wobei die Klinke als beweglicher Magnetanker bzw. als Teil eines Magnetankers eines Elektromagneten ausgebildet ist.

Bei Gurtaufrollern für Kraftfahrzeug-Sicherheitsgurte ist es erforderlich, das Gurtband so schnell wie möglich gegen einen Abzug zu blockieren, wenn eine Notsituation (Aufprall o. ä.) aufgetreten ist, um die Bewegung der Insassen nach Eintritt der Notsituation so gering wie möglich zu halten.

Zur Blockierung des Gurtbandabzuges sind mechanische, gurtsensitive Aufrollsysteme bekannt, deren Sperrmechanismus als Reaktion auf einen Gurtbandabzug, der oberhalb einer vorbestimmten Beschleunigungsgröße liegt, ausgelöst wird.

Ferner sind elektrisch ansteuerbare Sperrmechanismen bekannt, die durch einen im Fahrzeug eingebauten Sensor angesteuert werden, der als Reaktion auf eine Notsituation, wie z. B. negative Beschleunigung des Kraftfahrzeuges, ein elektrisches Signal abgibt, das mittelbar oder unmittelbar zur Ansteuerung des Sperrmechanismus dient.

Aus der gattungsgemäßen US-A-4,036,322 ist eine Vorrichtung zur elektromechanischen Betätigung eines Sperrmechanismus eines Gurtaufrollers, insbesondere für Kraftfahrzeug-Sicherheitsgurte bekanntgeworden, bei dem eine in einem Gurtaufrollergehäuse gelagerte Haspelwelle vorgesehen ist und wobei mit der Haspelwelle ein umlaufendes Sperrrad verbunden ist, in das eine zur Blockierung des Gurtabzuges vorgesehene Sperrklinke eingreift. Eine drehbar auf der Haspelwelle gelagerte, mit einer Innenverzahnung versehene Steuerscheibe wird im Sperrfall mittels eines elektromagnetisch betätigbaren Sperrelementes verriegelt, und bei einer Abwickelbewegung wird über die Steuerscheibe die Sperrklinke in die Sperrlage bewegt. Dabei wird das Sperrelement von einem Magnetanker angesteuert, für den Anschlagmittel zur Hubbegrenzung vorgesehen sind, und der Magnet ist mit einer innenliegenden Erregerspule ausgebildet und ist zentrisch an dem Gurtaufrollerhäuse befestigt.

Bei dieser im großen und ganzen zufriedenstellend arbeitenden Anordnung müssen zur Erzielung der Sperrung der Haspelwelle jedoch Bauelemente mit relativ großen Massen bewegt werden, so daß die Reaktionszeit des Systems relativ groß ist.

Daneben ist aus der DE-A-37 42 109 ein elektrisch ansteuerbarer Sperrmechanismus eines Gurtaufrollers bekannt. Dabei ist ein Elektromagnet vorgesehen, bei dessen Erregung ein auf der Haspelwelle mitlaufendes Trägheitsglied abgebremst wird. Sobald dabei eine Relativ-Bewegung zwischen der Haspelwelle und dem Trägheitsglied auftritt, wirkt ein Zapfen des Trägheitsgliedes auf eine auf einer mit der Haspelwelle umlaufenden Tragplatte gelagerten Klinke ein und betätigt diese derart, daß die Klinke in ein ringförmiges Sperrelement eingreift. Das Sperrelement wird sodann mitgenommen (gedreht), und ein an diesem Sperrelement angeordneter Zapfen wirkt schließlich auf eine Sperrklinke ein, die schließlich die Blockierung des Gurtbandes/der Haspelwelle bewirkt.

Bei den bekannten, im großen und ganzen zufriedenstellend funktionierenden Anordnungen können jedoch Störungen des ordnungsgemäßen Betriebes durch externe magnetische Streufelder , die durch ggfs. anderweitige Magnetsysteme hervorgerufen werden, auftreten. Andererseits können durch das Magnetsystem der Anordnung selbst Streufelder hervorgerufen werden, die wiederum anderweitige elektronische Baugruppen störend beeinflussen können.

Der Erfindung liegt nunmehr die Aufgabe zugrunde, eine Vorrichtung der eingangs genannten Art dahingehend auszubilden, daß das elektromagnetische System der Vorrichtung eine gute Abschirmung gegen externe Magnetfelder aufweist und auch selbst keine nennenswerten magnetischen Streufelder nach außen hin erzeugt, wobei die aktiven Bauelemente des Sperrsystems möglichst kleinvolumig und mit geringer Masse ausgebildet sein sollen und die Reaktionszeit des Sperrsystems auf möglichst kleine Werte reduziert werden soll.

Diese Aufgabe wird dadurch gelöst, daß der Elektromagnet als Topfmagnet ausgebildet ist, der mit seinem Topfrand die Steuerscheibe übergreift, und der mit einem zylindrischen Kern versehen ist, über den der magnetische Fluß über die magnetisierbare oder magnetische Klinke zum Rand des Topfmagneten verläuft, und daß die Klinke mit einem Permanentmagneten versehen ist.

Weitere vorteilhafte Ausgestaltungen der Erfindung sind in den Ansprüchen 2 bis 9 angegeben.

Die mit der Erfindung erzielten Vorteile bestehen insbesondere darin, daß die wesentlichen Bauelemente des Sperrmechanismus innerhalb der ringförmigen steuerscheibe angeordnet sind und die Anordnung selbst von einem Metalltopf aus weichmagnetischem Material umgeben ist. Dabei dient dieser Metalltopf gleichzeitig als Topf des Erreger-Topfmagneten. Dadurch wird eine ausgezeichnete Abschirmung gegen externe Magnetfelder erzielt, so daß diese das innere Magnetsystem/Sperrsystem nicht beeinflussen können. Gleichzeitig wird auch erreicht, daß außerhalb des Metalltopfes/des Topfmagneten keine nennenswerten Magnetfelder bei Erregung des Topfmagneten auftreten. Ein weiterer Vorteil bei der erfindungsgemäßen Anordnung ist darin zu sehen, daß die aktiven Bauelemente des Sperrmechanismus klein und mit geringer Masse ausgebildet werden können, so daß die Reaktionszeit beim Auslösen des Sperrvorganges sehr klein gehalten werden kann. Ferner können die Bauelemente des Sperrmechanismus problemlos auch so ausgelegt werden, daß ihre Funktion zusätzlich gurtsensitiv erfolgt, also auch eine Kombination zwischen elektromagnetischer Sperrung des Gurtabzuges mittels Ansteuerung von einem Beschleunigungssensor und der mechanischen Sperrung bei Gurtbeschleunigung beim Abzug des Gurtes möglich ist.
Hierbei wird durch die elektromechanische Sperrung eine kürzere Reaktionszeit bis zur Sperrung des Gurtes erzielt, als es die mechanische, gurtsensitive Einrichtung ermöglicht.
Bei einem Ausfall des Beschleunigungsgebers oder der Ansteuerungsmittel ist dann immer noch ein sicheres Sperren des Gurtes gegeben. Weitere Vorteile, Merkmale und Anwendungsmöglichkeiten ergeben sich aus der folgenden Beschreibung eines Ausführungsbeispieles und aus den Zeichnungen, auf die Bezug genommen wird.

Es zeigen
- Fig. 1: die Ansicht eines Gurtaufrollers im Schnitt,
- Fig. 2: eine perspektivische Explosionszeichnung des Gurtaufrollers gem. Fig. 1, und
- Fig. 3 - 23: verschiedene Ausgestaltungen und Anordnungen einer Klinke des Sperrmechanismus.

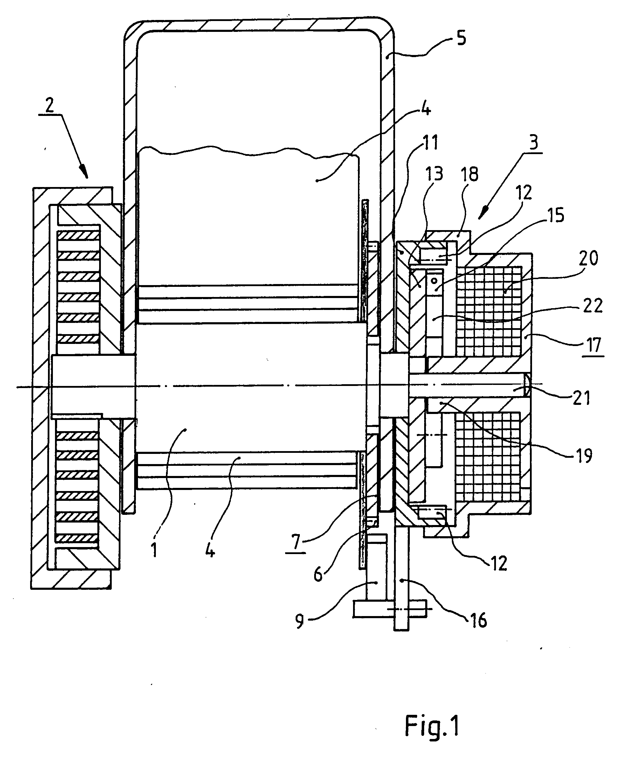

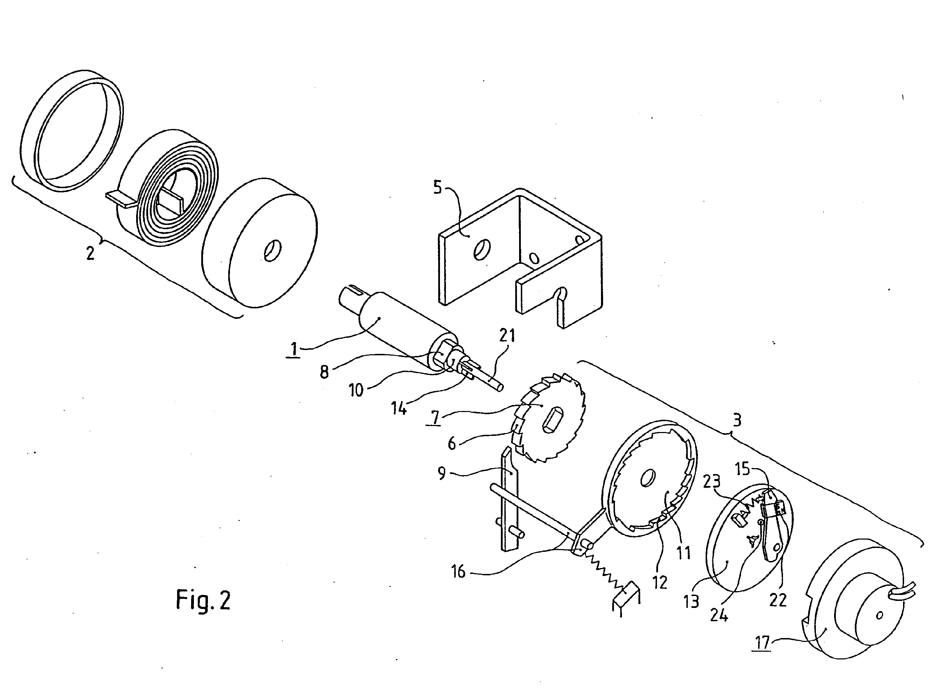

In den Fig. 1 und 2 ist ein Gurtaufroller dargestellt, der im wesentlichen aus einer Haspelwelle 1, einer Rückspuleinrichtung 2 sowie einem Sperrmechanismus 3 besteht. Dabei ist die Haspelwelle, auf die das Gurtband 4 aufgewickelt wird, innerhalb eines Gehäuses 5 angeordnet, und die Rückspuleinrichtung sowie der Sperrmechanismus sind an gegenüberliegenden Seiten des Gehäuses vorgesehen.
Der Sperrmechanismus 3 besteht im wesentlichen aus einem mit Sperrzähnen 6 versehenen Sperrad 7, das auf einen axialen Zapfen 8 der Haspelwelle aufgesteckt und mit dieser in Drehrichtung gesehen, fest verbunden ist und einer ortsfest am Gehäuse gelagerten Sperrklinke 9, die bei Betätigung in die Sperrzähne eingreift und eine Drehung des Sperrades und damit der Haspelwelle in Abzugsrichtung des Gurtbandes verhindert (blockiert). Die Richtung/Ausbildung der Sperrzähne ist dabei so, daß lediglich die Drehung der Haspelwelle in Abzugsrichtung blockiert wird, eine Drehung der Haspelwelle in Gurtaufwickelrichtung jedoch möglich bleibt.
Auf einem weiteren Zapfenartigen Ansatz 10 der Haspewelle ist eine im wesentlichen ringförmige steuerscheibe 11 drehbar gehalten. Die steuerscheibe ist mit einer Innenverzahnung 12 versehen.
Schließlich ist noch eine scheibenförmige Tragplatte 13 vorgesehen, die auf einen weiteren Ansatz 14 der Haspelwelle aufgesteckt ist. Dabei ist dieser Ansatz so ausgebildet, daß die Tragplatte drehfest mit der Haspelwelle verbunden ist, so daß die Tragplatte bei Drehung der Haspelwelle stets mitgedreht wird. Auf der Tragplatte ist eine steuerbare Klinke 15 gelagert, die bei Betätigung in die Verzahnung 12 der steuerscheibe 11 eingreift, wobei dann bewirkt wird, daß die steuerscheibe mit in Drehrichtung der Haspelwelle gedreht wird.
Die räumliche Anordnung von steuerscheibe und Tragplatte/Sperrklinke ist dabei so vorgesehen, daß sich die Tragplatte innerhalb der ringförmigen steuerscheibe und insbesondere die Klinke 15 in der Ebene der Innenverzahnung 12 befindet.
Bei Eingriff der Klinke 15 in die Verzahnung und somit erfolgender Drehbewegung der steuerscheibe 11 wird über eine an diesem vorgesehene Hebelanordnung 16 die Sperrklinke 9 betätigt und die Sperrung/ Blockierung des Gurtbandes/der Haspelwelle in Abzugsrichtung bewirkt.

Zur Steuerung der Lage der Klinke 15 ist ein von außen über die vorstehend beschriebene Anordnung gestülpter, feststehender Topfmagnet 17 vorgesehen. Der Topfmagnet besteht aus einem äußeren Magnetgehäuse 18, einem inneren zentrischen Kern 19 und einer innenliegenden Erregerspule 20. Zur Zentrierung ragt ein wellenförmiger Ansatz 21 der Haspelwelle in den Kern des Topfmagneten hinein. Bei Bestromung der Erregerspule bildet sich das elektromagnetische Arbeitsfeld des Topfmagneten radial zwischen dem Kern und dem äußeren Magnetgehäuse aus. Bei der vorgesehenen Anordnung befindet sich die Klinke 15 im magnetischen Arbeitsfeld des Topfmagneten. Die Klinke ist mit einem Permanentmagneten 22 sowie einer Feder 23 versehen. In der Ruhelage der Anordnung, d.h. bei nicht bestromter Erregerspule des Topfmagneten, wird die Klinke durch die Kraft der Feder 23 in Eingriff mit der Innenverzahnung 12 der steuerscheibe gedrückt. Dabei wird, wie weiter vorn bereits erläutert, die Blockierung des Gurtbandabzuges bewirkt, wobei eine Aufwicklung des Gurtbandes jedoch noch möglich bleibt. Die Klinke "ratscht" in diesem letztgenannten Falle über die Verzahnung 12. Bei Bestromung des Topfmagneten wird ein elektromagnetischer Fluß im Arbeitsfeld des Topfmagneten aufgebaut, wodurch dann eine Kraft auf den Permanentmagneten und somit auf die Klinke, die als beweglicher Magnetanker des Magnetsystems wirkt, ausgeübt wird. Diese Kraft ist bei entsprechender Polung des Erregerstromes so gerichtet, daß die Klinke entgegen der Federkraft aus der Verzahnung 12 herausbewegt wird, bis sie an einem Anschlag 24 anliegt. Die Haspelwelle ist somit freigegeben und der Abzug des Gurtbandes kann erfolgen. Es kann ggfs. auch vorgesehen sein, die Klinke aus weichmagnetischem Material herzustellen und ohne Permanentmagneten zu verwenden. Auch bei dieser Ausführung wird durch das Magnetfeld des Topfmagneten bereits eine Kraft auf die Klinke ausgeübt. Diese Kraft kann jedoch bei Verwendung eines Permanentmagneten beträchtlich erhöht und die Arbeitssicherheit des Systems vergrößert werden.

Andererseits kann bei Einsatz eines Permanentmagneten die Klinke selbst ggfs. auch aus Kunststoffmaterial hergestellt werden.
Die Lagerstelle der Klinke 15 und die Verteilung ihrer Massen in bezug auf die Lagerstelle können so vorgesehen sein, daß bei Drehung der Haspelwelle/der Tragplatte eine Beschleunigungskraft auf die Klinke ausgeübt wird, die diese in Richtung zum Eingriff mit der Verzahnung 12 drückt. Durch entsprechende Abstimmung mit der entgegengesetzt wirkenden Kraft des Elektromagnetfeldes kann erreicht werden, daß diese Kraft bei Erreichen einer bestimmten Drehgeschwindigkeit der Haspelwelle (Gurtabzugsgeschwindigkeit) ausreicht,. die elektromagnetische Kraft zu überwinden, so daß die Klinke in die Verzahnung 12 gedrückt wird und die Haspelwelle blockiert wird.

Bei der vorstehend beschriebenen Anordnung bewirken somit verschiedene Ereignisse unabhängig voneinander. eine sofortige Blockierung der Haspelwelle in Gurtabzugsrichtung:
a) Ausfall der Versorgungsspannung oder eine Unterbrechung der Kabel zum Topfmagneten,
b) ein Signal eines Beschleunigungssensors, das die Abschaltung des Erregerstromes des Topfmagneten auslöst,
c) eine gurtsensitive Einleitung der Sperrung bei überschreiten eines festgesetzten Wertes der Gurtbandabzugsbeschleunigung.

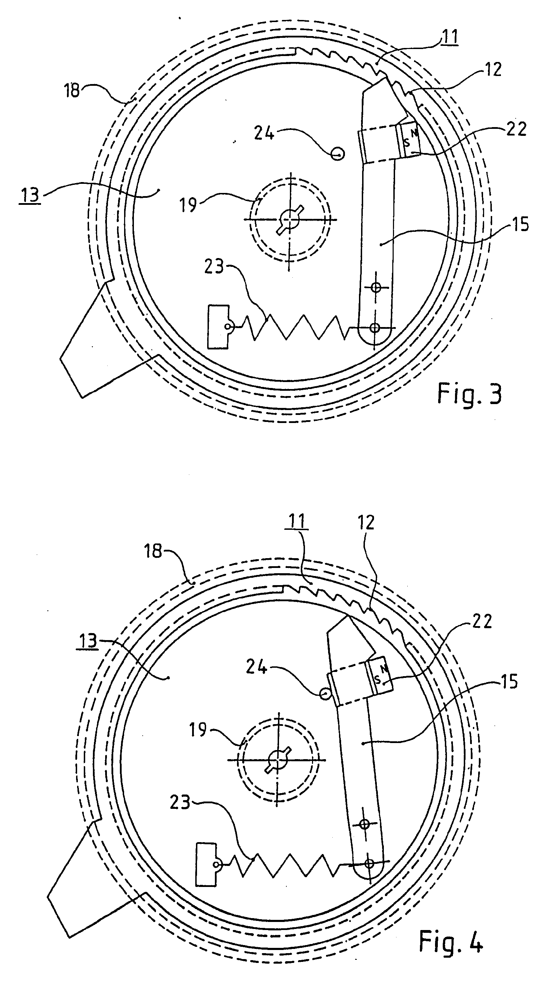

In den Fig. 3 - 23 sind verschiedene Anordnungen und Ausgestaltungen der Klinke 15 dargestellt und werden nachfolgend kurz erläutert.
Dabei sind je nach Anordnung der Feder 23, 23′ in Verbindung mit der Klinke zwei unterschiedlich wirkende Systeme möglich, und zwar entweder mit einer Blockierung der Haspelwelle bei unbestromtem Topfmagneten oder mit einer Blockiërung der Haspelwelle, die erst bei Bestromung des Topfmagneten wirksam wird. Je nach Anwendungsfall kann das eine oder andere System vorteilhaft sein.

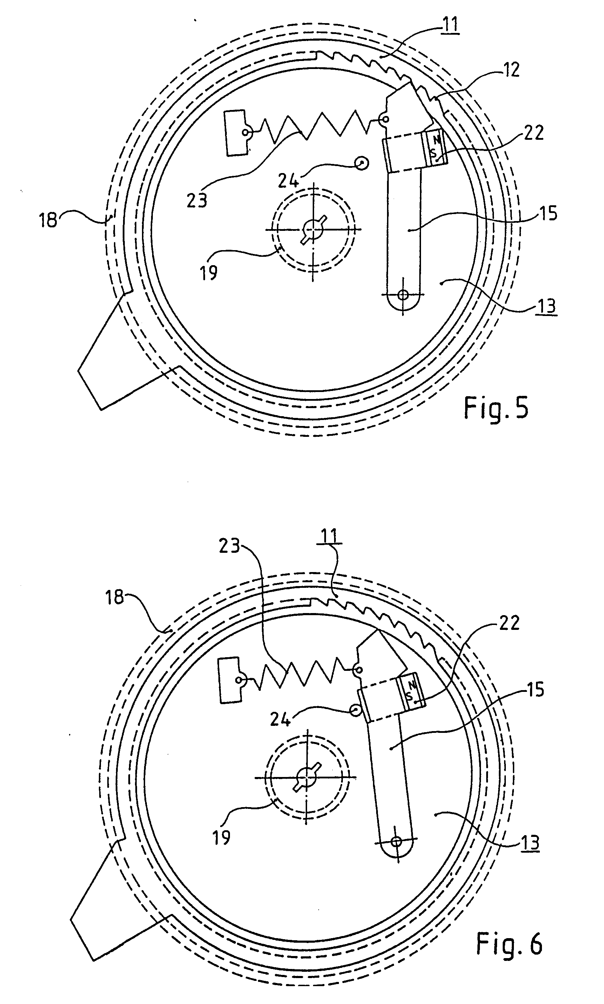

In den Fig. 3 und 4 ist eine Anordnung der Klinke 15 in Verbindung mit einer Zugfeder 23 dargestellt, wobei hierbei die Rastlage der Klinke und damit die Blockierung der Haspelwelle bei unbestromtem Topfvorgesehen ist. Dabei zeigt Fig. 3 die Lage der Klinke bei unbestromtem Topfmagneten und Fig. 4 die Lage der Klinke bei bestromtem Topfmagneten.

In den Fig. 5 und 6 ist eine Anordnung der Klinke 15 in Verbindung mit einer Zugfeder 23 dargestellt, wobei hierbei die Rastlage der Klinke und damit die Blockierung der Haspelwelle bei bestromtem Topfmagneten vorgesehen ist.
Dabei zeigt Fig. 5 die Lage der Klinke bei bestromtem Topfmagneten und Fig. 6 die Lage der Klinke bei unbestromtem Topfmagneten.

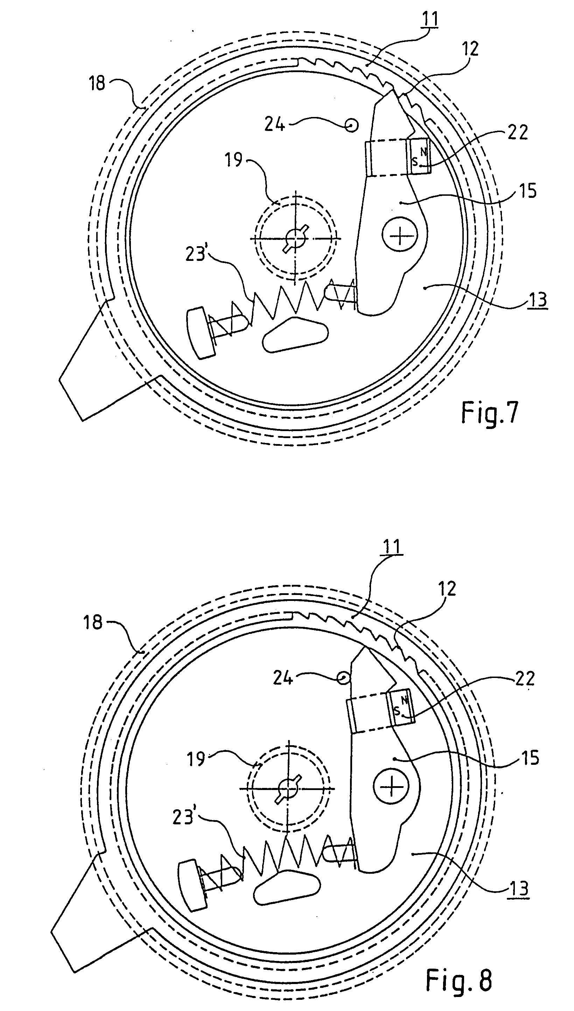

In den Fig. 7 und 8 ist die Anordnung der Klinke 15 in Verbindung mit einer Druckfeder 23' dargestellt, wobei hier die Rastlage der Klinke und damit die Blockierung der Haspelwelle bei Bestromung des Topfmagneten erzielt wird. Dabei zeigt Fig. 7 die Lage der Klinke bei bestromtem Topfmagneten und Fig. 8 deren Lage bei unbestromtem Magneten.

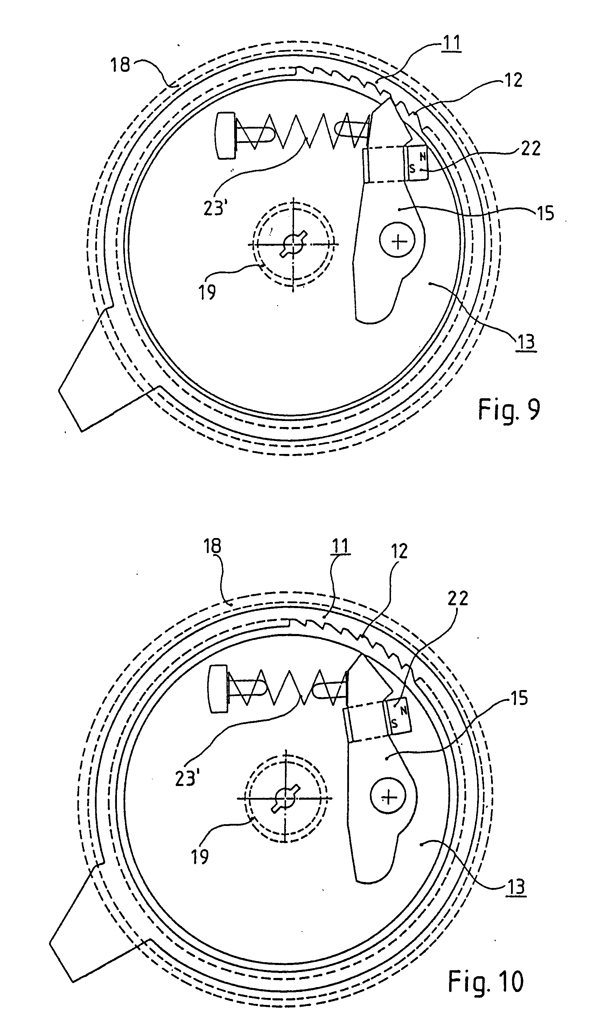

In den Fig. 9 und 10 ist die Anordnung der Klinke 15 in Verbindung mit einer Druckfeder 23' dargestellt, wobei hier die Rastlage der Klinke und damit die Blockierung der Haspelwelle bei unbestromtem Topfmagneten erzielt wird. Dabei zeigt Fig. 9 die Lage der Klinke bei unbestromtem Topfmagneten und Fig. 10 deren Lage bei bestromtem Magneten.

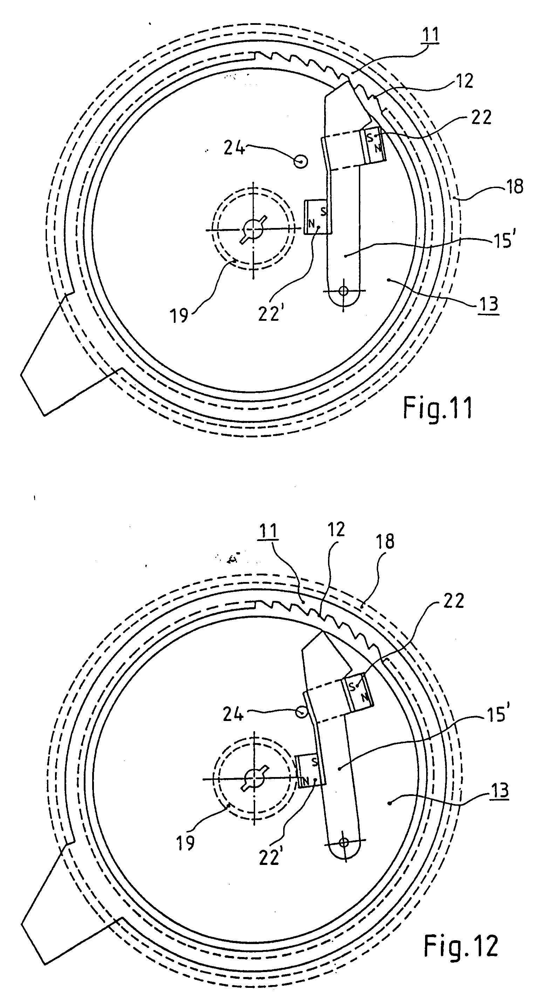

Schließlich ist in Fig. 11 und 12 eine Klinke 15′ und deren Anordnung auf der Tragplatte 13 gezeigt die ohne zusätzliche Feder in ihre jeweilige Endlage bewegbar ist. Hierzu ist an der Klinke ein weiterer Permanentmagnet 22' angeordnet, dessen Polung gegensinnig zum ersten Permanentmagneten 22 ausgebildet ist. Je nach Bestromungsrichtung des Topfmagneten wird die Klinke 15′ dabei in ihre eine oder andere Endlage bewegt, wobei Fig. 11 die Lage der Klinke in der Stellung zeigt, in der die Haspelwelle blockiert ist, und Fig. 12 zeigt die Lage der Klinke in der die Haspelwelle freigegeben ist.

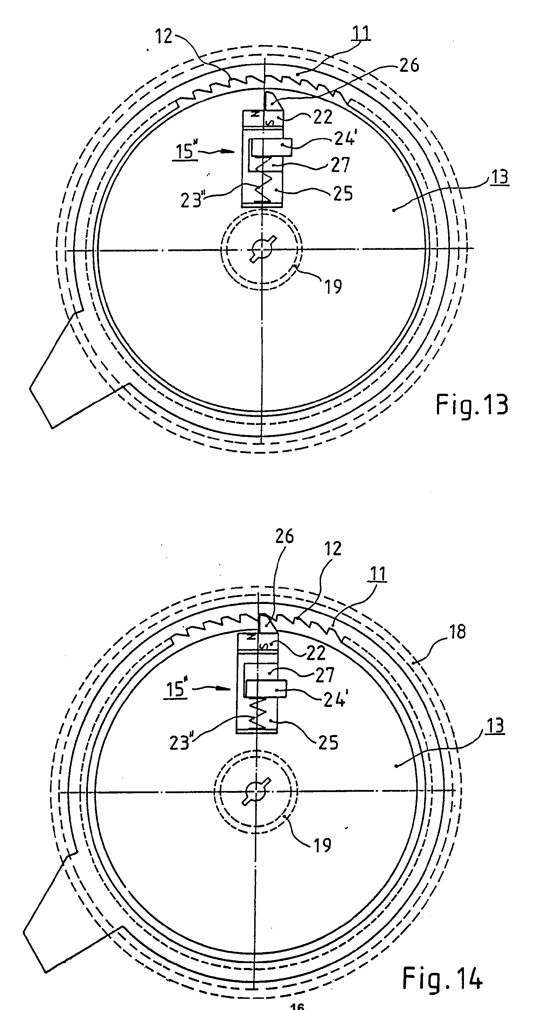

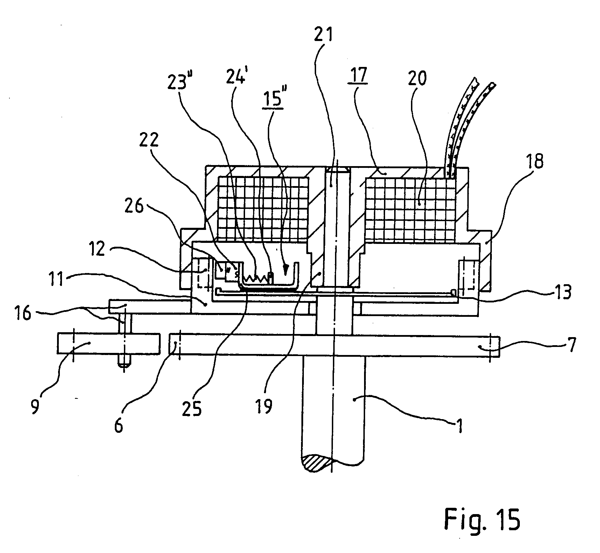

In den Fig. 13 und 14 ist eine weiterhin modifizierte Klinke 15" dargestellt, während Fig. 15 einen Schnitt durch den Sperrmechanismus zeigt, in dem eine derartige Klinke vorgesehen ist. Dabei sind mit den vorstehenden Ausführungen identische Teile mit den gleichen Bezugszeichen versehen. Die Klinke 15˝ besteht im wesentlichen aus einem U-förmig gebogenen Klinkenteil 25, an dessen Vorderseite ein Permanentmagnet 22 sowie eine Rastnase 26 vorgesehen sind.
Das Klinkenteil 25 ist radial verschiebbar an der Tragplatte 13 gehalten und weist eine Aussparung 27 auf, in der sich ein an der Tragplatte angeformter bzw. angebrachter Anschlag 24′ befindet.
Die Klinke ist somit um den Betrag des freien Bereiches in der Aussparung verschiebbar. Eine innerhalb des Klinkenteiles eingesetzte Druckfeder 23˝ bewirkt, daß die Klinke bei nicht bestromtem Topfmagneten außer Eingriff mit der Verzahnung 12 gelangt (s. Fig. 12), während bei Bestromung des Topfmagneten die Rastnase 26 in die Verzahnung gedrückt wird (s. Fig. 13) und eine Blockierung der Haspelwelle in Gurtabzugsrichtung erreicht wird.

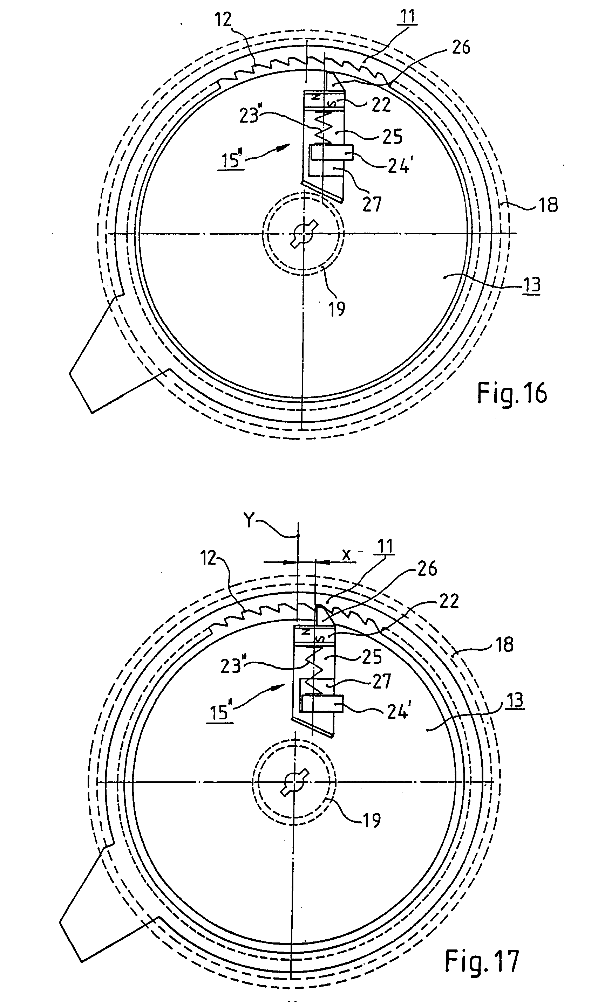

In den Fig. 16 und 17 ist eine der vorstehenden Ausführungen (Fig. 13 bis 13) im wesentlichen entsprechende Ausbildung der Klinke 15˝ gezeigt, wobei hier die Druckfeder 23˝ jedoch so in das Klinkenteil 25 eingesetzt ist, daß die Klinke bei nicht bestromtem Topfmagneten aus der Verzahnung zurückgezogen wird und die Haspelwelle freigibt (Fig. 17). Bei der gezeigten Anordnung ist weiterhin vorgesehen, daß die Bewegungsrichtung (Achse) der Klinke um Betrag X parallel zur Mittelachse Y des Systems verschoben ist.

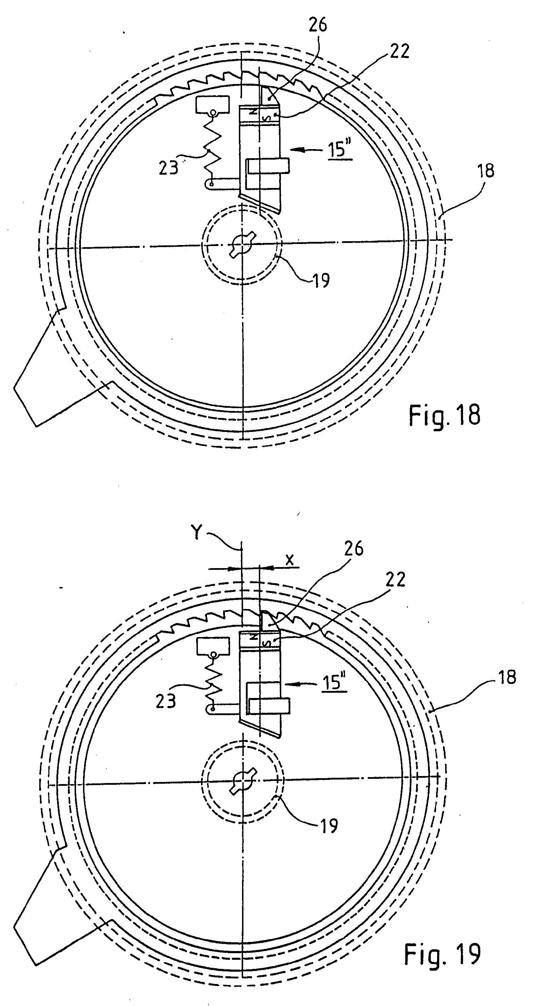

In den Fig. 18 und 19 ist eine weitere Ausführung der Klinkenanordnung gezeigt, deren Aufbau und Wirkungsweise der in den Fig. 16 und 17 beschriebenen Ausführung entspricht, wobei hier jedoch eine außerhalb der Klinke liegende Zugfeder 23 vorgesehen ist, die die Klinke bei nicht bestromtem Topfmagneten in ihre Rastposition zieht.

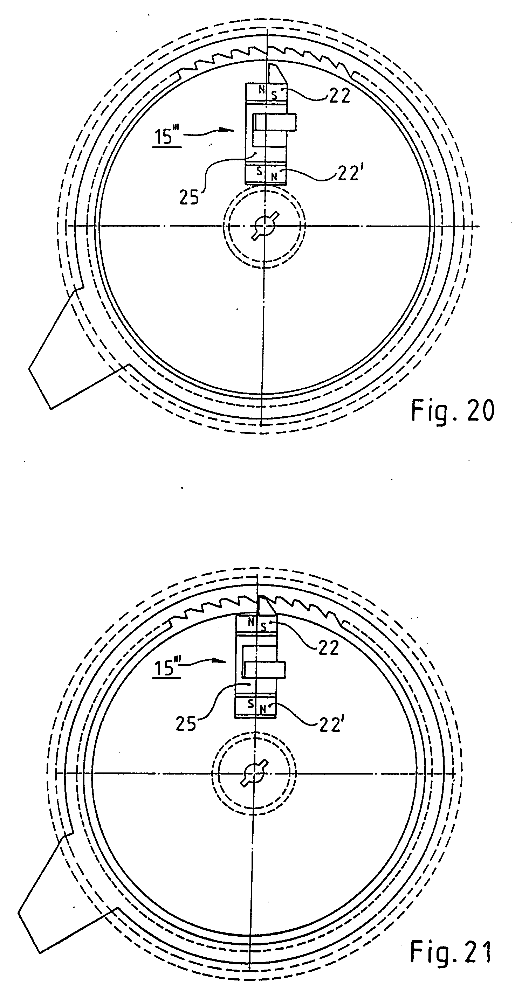

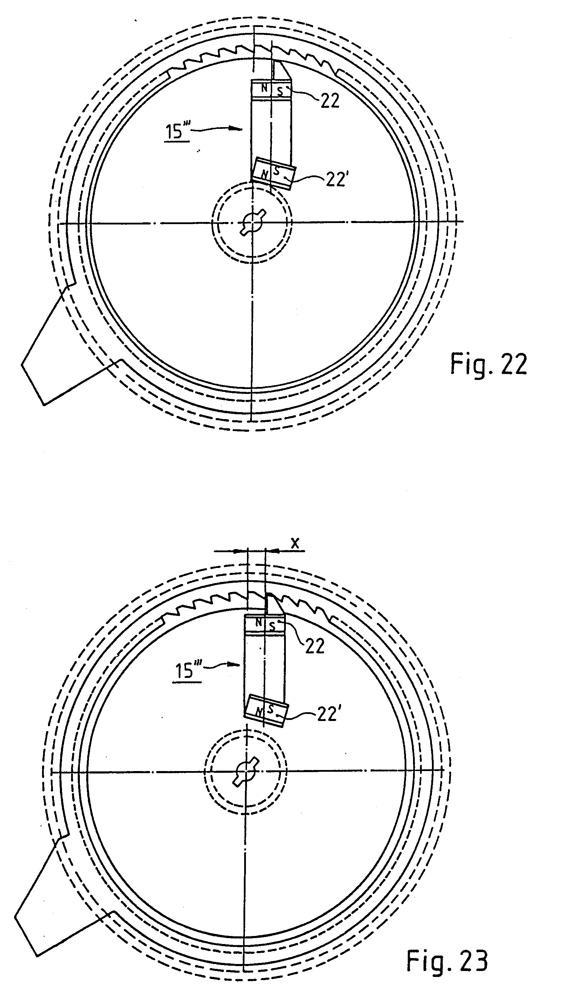

Schließlich sind in den Fig. 20 bis 23 noch zwei Ausgestaltungen der Klinke 15‴ gezeigt, die ohne zusätzliche Feder in ihre jeweilige Endlage bewegbar ist. Hierzu ist an der Klinke bzw. am Klinkenteil 25 ein weiterer Permanentmagnet 22′ angeordnet, dessen Polung entgegengesetzt zum ersten Permanentmagneten ausgebildet ist. Je nach Bestromungsrichtung des Tofmagneten wird die Klinke 15 ‴ dabei in die eine oder andere Endlage bewegt, wobei Fig. 20 und 22 die Lage der Klinke zeigt, in der die Haspelwelle freigegeben ist, und Fig. 21 und 23 zeigen die Lage der Klinke, in der die Haspelwelle blockiert ist.

## Patentansprüche

1. Vorrichtung zur elektromagnetischen Betätigung eines Sperrmechanismus eines Gurtaufrollers, insbesondere für Kraftfahrzeug-Sicherheitsgurte, mit einer in einem Gurtaufrollgehäuse gelagerten Haspelwelle (1), einem mit der Haspelwelle verbundenen und umlaufenden Sperrad (7) und einer Sperrklinke (9), die zur Blockierung des Gurtabzuges in das Sperrad eingreift, wobei eine drehbar auf der Haspelwelle (1) gelagerte, ringförmige Steuerscheibe (11) mit einer Innenverzahnung (12) vorgesehen ist, die mit einem die Sperrklinke (9) betätigenden äußeren Ansatz/ Zapfen (16) versehen ist, und wobei eine mit der Haspelwelle (1) verbundene und umlaufende Tragplatte (13) vorgesehen ist, die innerhalb der ringförmigen Steuerscheibe (11) angeordnet ist und auf der eine steuerbare Klinke (15, 15', 15", 15"') gelagert ist, die bei Betätigung in die Verzahnung der Steuerscheibe (11) eingreift und eine Mitnahme/Drehung der Steuerscheibe bei Drehung der Haspelwelle bewirkt, und wobei die Klinke (15, 15', 15", 15"') als beweglicher Magnetanker bzw. als Teil eines Magnetankers eines Elektromagneten ausgebildet ist, dadurch gekennzeichnet,
daß der Elektromagnet als Topfmagnet (17) ausgebildet ist, der mit seinem Topfrand die Steuerscheibe (11) übergreift, und der mit einem zylindrischen Kern (19) versehen ist, über den der magnetische Fluß über die magnetisierbare oder magnetische Klinke (15, 15′, 15˝, 15‴) zum Rand des Topfmagneten verläuft, und
daß die Klinke mit einem Permanentmagneten (22) versehen ist.

2. Vorrichtung nach Anspruch 1, dadurch gekennzeichnet, daß die Klinke (15, 15') aus Kunststoffmaterial besteht, und drehbeweglich auf der Tragplatte (13) gelagert und angeordnet ist, und
daß die Klinke mit einem Permanentmagneten (22) versehen ist, der derart angeordnet ist, daß bei Bestromung des Topfmagneten (17) eine Kraft auf die Klinke ausgeübt wird, die derart gerichtet ist, daß die Sperrklinke eine Drehbewegung um ihre Lagerstelle ausführt.

3. Vorrichtung nach Anspruch 1, dadurch gekennzeichnet, daß die Klinke (15˝, 15‴) in Richtung ihrer Längsachse verschiebbar auf der Lagerplatte (13) gelagert ist, wobei sich die Klinke im Magnetfeld des Topfmagneten (17) befindet, und
daß die Klinke (15˝, 15‴) aus einem weichmagnetischen Eisenteil (25), einem Permanentmagneten (22) und einer angeformten Rastnase (26) gebildet ist, wobei bei Bestromung des Topfmagneten (17) eine Kraft auf die Klinke ausgeübt wird, die die Klinke in Richtung ihrer Längsachse bewegt.

4. Vorrichtung nach einem der Ansprüche 1 - 3, dadurch gekennzeichnet,
daß die Klinke (15, 15′, 15˝, 15‴) mit einem Federelement (23, 23′,23˝, 23‴) versehen ist, das die Klinke in nicht bestromtem Zustand des Topfmagneten (17) in Eingriff mit der Rastverzahnung (12) der Steuerscheibe (11) drückt.

5. Vorrichtung nach einem der Ansprüche 1 - 3, dadurch gekennzeichnet,
daß die Klinke (15, 15′, 15˝, 15‴) mit einem Federelement (23, 23′, 23˝, 23‴) versehen ist, das die Klinke in nicht bestromtem Zustand des Topfmagneten (17) in eine Stellung drückt, in der die Klinke außer Eingriff mit der Rastverzahnung (12) der Steuerscheibe (11) ist.

6. Vorrichtung nach Anspruch 1, dadurch gekennzeichnet, daß die Klinke (15˝, 15‴) aus einem weichmagnetischen Eisenteil (25) mit endseitig angeordneten, gegensinnig gepolten Permanentmagneten (22, 22') und einer an dem nach außen, d. h. zur Steuerscheibe (11) weisenden Permanentmagneten angeformten Rastnase (26) gebildet ist.

7. Vorrichtung nach Anspruch 1, dadurch gekennzeichnet, daß die Klinke aus zwei gegensinnig gepolt zusammengefügten Permanentmagneten und einer an dem nach außen, d. h. zur Steuerscheibe (11) weisenden Permanentmagneten angeformten Rastnase gebildet ist.

8. Vorrichtung nach Anspruch 1, dadurch gekennzeichnet, daß die Klinke aus einem einstückigen, an den Stirnseiten gleichnamige Pole aufweisenden Permanentmagneten und einer an dem nach außen, d. h. zur Steu- erscheibe (11) weisenden Magnetende angeformten Rastnase gebildet ist.

9. Vorrichtung nach einem der vorstehenden Ansprüche, dadurch gekennzeichnet,
daß die Masse der Klinke (15, 15′, 15˝, 15‴) so bemessen ist, daß die Klinke bei Überschreiten einer bestimmten, radial gerichteten Beschleunigung durch Drehung der Haspelwelle (1) und der damit verbundenen Tragplatte (13) in die Sperrposition, d. h. in Eingriff mit der Verzahnung (12) der Steuerscheibe (11) bewegt wird.

## Claims

1. Device for electromagnetically actuating a belt retractor locking mechanism, especially for motor vehicle safety belts, with a reel shaft (1) which is mounted in a belt retractor housing, with a ratchet wheel (7) which is connected to said reel shaft and rotates with it, and with a locking pawl (9) which engages into said ratchet wheel in order to block the pulling-out of the belt, said actuating device being provided with an annular actuating disc (11) which is rotatably mounted on the reel shaft (1), which has an internally disposed tooth system (12), and which is equipped with an external lug-and-pin arrangement (16) for actuating the locking pawl (9), and being further provided with a carrier plate (13) which is connected to the reel shaft (1) and rotates with it, which is disposed inside the annular actuating disc (11), and on which a controllable pawl (15, 15′, 15˝, 15‴) is mounted and, in the event of being actuated, engages with the tooth system on the actuating disc (11) and, in the event of the reel shaft rotating, drives/rotates said actuating disc, said pawl (15, 15′, 15˝, 15‴) being configured as a movable magnet armature or, more particularly, as a component of a magnet armature which is associated with an electromagnet,
characterized in that the electromagnet is configured as a pot-screened electromagnet (17) which is disposed with its pot rim overlapping the actuating disc (11), and which is equipped with a cylindrical core (19), the magnetic flux running to the pot rim of said pot-screened electromagnet via said core and via the pawl (15, 15′, 15˝, 15‴), which is magnetizable or magnetic, and in that said pawl is equipped with a permanent magnet (22).

2. Device according to Claim 1, characterized in that the pawl (15, 15') is composed of a plastic, and is disposed and rotatably mounted on the carrier plate (13), and in that said pawl is equipped with a permanent magnet (22) which is disposed in a manner such that when an electric current is flowing through the pot-screened electromagnet (17), said pawl is subjected to a force which is directed so as to cause the locking pawl to rotate about its bearing.

3. Device according to Claim 1, characterized in that the pawl (15˝, 15‴) is mounted on the carrier plate (13) in a manner such that it is movable in the direction of its lengthwise axis while situated within the magnetic field of the pot-screened electromagnet (17), and in that the pawl (15˝, 15‴) is formed by a soft-magnetic iron component (25), a permanent magnet (22), and an integrally formed catch nose (26), and when an electric current is flowing through the pot-screened electromagnet (17), said pawl is subjected to a force which moves it in the direction of its lengthwise axis.

4. Device according to any one of Claims 1 to 3, characterized in that the pawl (15, 15′, 15˝, 15‴) is equipped with a spring element (23, 23′, 23˝, 23‴) which presses it into engagement with the locking-tooth system (12) on the actuating disc (11) when no electric current is flowing through the pot-screened electromagnet (17).

5. Device according to any one of Claims 1 to 3, characterized in that the pawl (15, 15′, 15˝, 15‴) is equipped with a spring element (23, 23′, 23˝, 23‴) which, when no electric current is flowing through the pot-screened electromagnet (17), presses it to a position in which it is disengaged from the locking-tooth system (12) on the actuating disc (11).

6. Device according to Claim 1, characterized in that the pawl (15˝, 15‴) is formed by a soft-magnetic iron component (25) with permanent magnets (22, 22') disposed at its ends with their like poles pointing in opposite directions, and by a catch nose (26) which is integrally formed on the outward-pointing permanent magnet, i.e. on the permanent magnet which points towards the actuating disc (11).

7. Device according to Claim 1, characterized in that the pawl is formed by two permanent magnets which are joined together with their like poles pointing in opposite directions, and by a catch nose which is integrally formed on the outward-pointing permanent magnet, i.e. on the permanent magnet which points towards the actuating disc (11).

8. Device according to Claim 1, characterized in that the pawl is formed by a one-piece permanent magnet which exhibits like poles at the end faces, and by a catch nose which is integrally formed on the outward-pointing end of said magnet, i.e. on that magnet end which points towards the actuating disc (11).

9. Device according to any one of the preceding Claims, characterized in that the mass of the pawl (15, 15′, 15˝, 15‴) is specified to be such that in the event of exceedance of a defined radial acceleration due to rotation of the reel shaft (1) and carrier plate (13) connected thereto, said pawl is moved to the locking position, i.e. into engagement with the tooth system (12) on the actuating disc (11).

## Revendications

1. Dispositif de commande électromagnétique du mécanisme de blocage d'un enrouleur de ceinture, en particulier pour ceintures de sécurité de véhicules automobiles, comportant un dévidoir (1) logé dans le boîtier de l'enrouleur de ceinture, une roue de blocage (7) assemblée et tournant avec le dévidoir (1), et, un cliquet de blocage (9) s'engageant dans la roue de blocage en vue de bloquer le déroulement de la ceinture, où est prévu
- un disque de guidage (11) annulaire disposé en pouvant tourner sur le dévidoir (1), pourvu d'une denture intérieure (12) et comportant une saillie / un tenon (16) extérieur actionnant le cliquet de blocage (9),
- une plaque-support (13) assemblée et tournant avec le dévidoir (1), disposée à l'intérieur du disque de guidage (11) annulaire et sur laquelle est disposé un cliquet dirigeable (15), (15′), (15˝), (15‴) qui, lorsqu'actionné, s'engage dans la denture du disque de guidage (11) et provoque l'entraînement / la rotation de ce denier en cas de rotation du dévidoir, et, qui est constitué d'un rotor mobile de magnéto, respectivement d'une partie d'un rotor mobile de magnéto d'un électroaimant,
*caractérisé en ce que* l'électroaimant est un électroaimant cuirassé (17) dont le bord recouvre le disque de guidage (11) et qui comporte un noyau intérieur (19) cylindrique grâce auquel le flux magnétique passe par le cliquet magnétisabale ou magnétique (15), (15′), (15˝), (15‴) vers le bord de l'électroaimant cuirassé, le cliquet comportant un aimant permanent (22).

2. Dispositif selon la revendication 1 *caractérisé en ce que* le cliquet (15), (15′) qui est en matière synthétique est disposé sur la plaque-support (13) en pouvant tourner et comporte un aimant permanent (22) disposé de telle sorte que, lorsque l'électroaimant cuirassé (17) reçoit du courant, une force s'exerce sur le cliquet, orientée pour que le cliquet de blocage effectue un mouvement de rotation autour de son axe d'articulation.

3. Dispositif selon la revendication 1 *caractérisé en ce que* le cliquet (15˝), (15‴) est disposé sur la plaque-support (13) en étant déplaçable en direction de son axe longitudinal, le cliquet se trouvant dans le champ magnétique de l'électroaimant cuirassé, et *en ce que* le cliquet (15˝), (15‴) est constitué d'une pièce (25) de fer magnétique doux, d'un aimant permanent (22) et d'un nez de blocage (26) formé sur ledit cliquet, une force étant exercée sur le cliquet pour le déplacer en direction de son axe longitudinal, lorsque du courant est appliqué sur l'électroaimant cuirassé (17).

4. Dispositif selon l'une des revendications 1 à 3 *caractérisé en ce que* le cliquet (15), (15′), (15˝), (15‴) comporte un ressort (23), (23′), (23˝), (23‴) qui pousse le cliquet dans sa position d'engagement dans la denture (12) du disque de guidage (11) lorsque l'électroaimant cuirassé (17) ne reçoit pas de courant.

5. Dispositif selon l'une des revendications 1 à 3 *caractérisé en ce que* le cliquet (15), (15′), (15˝), (15‴) comporte un ressort (23), (23′), (23˝), (23‴) qui pousse le cliquet dans une position de dégagement de la denture (12) du disque de guidage (11) lorsque l'électroaimant cuirassé (17) ne reçoit pas de courant.

6. Dispositif selon la revendication 1 *caractérisé en ce que* le cliquet (15′), (15˝) est constitué d'une pièce (25) de fer magnétique doux avec des aimants permanents (22), (22′) de polarité opposée, disposés à ses extrémités, et, d'un nez de blocage (26) formé sur l'aimant permanent orienté vers l'extérieur, c'est-à-dire vers le disque de guidage (11).

7. Dispositif selon la revendication 1 *caractérisé en ce que* le cliquet est constitué de deux aimants permanents de polarité opposé, assemblés l'un avec l'autre, et, d'un nez de blocage formé sur l'aimant permanent orienté vers l'extérieur, c'est-à-dire vers le disque de guidage (11).

8. Dispositif selon la revendication 1 *caractérisé en ce que* le cliquet est constitué d'un aimant permanent en une seule pièce dont les faces frontales présentent des pôles de même nom, et, d'un nez de blocage formé sur l'extrémité de l'aimant permanent orientée vers l'extérieur, c'est-à-dire vers le disque de guidage (11).

9. Dispositif selon l'une des revendications précédentes *caractérisé en ce que* la masse du cliquet (15), (15′), (15˝), (15‴) est dimensionnée de sorte qu'en cas de dépassement d'une accélération radiale déterminée, le cliquet se déplace dans sa position de blocage, c'est-à-dire dans une position d'engagement dans la denture (12) du disque de guidage (11), du fait du mouvement de rotation du dévidoir (1) et de la plaque-support (13) assemblée avec le dévidoir.
